# NEUE EUROPÄISCHE PATENTSCHRIFT

(11) **EP 0 330 100 B2**
(45) Veröffentlichungstag und Bekanntmachung des Hinweises auf die Entscheidung über den Einspruch: **02.04.1997**
(45) Hinweis auf die Patenterteilung: 04.08.1993
(21) Anmeldenummer: 89102842.5
(22) Anmeldetag: 18.02.1989
(51) Int. Cl.: G01B 11/02, G01B 11/00, G01S 17/06, G01S 17/87

(54) **Optische Messeinrichtung**
Optical measuring device
Dispositif de mesure optique

(30) Priorität: 23.02.1988 DE 3805548
(43) Veröffentlichungstag der Anmeldung: 30.08.1989
(73) Patentinhaber: Thiedig, Ullrich, Dipl.-Ing., D-38118 Braunschweig (DE); Wente, Holger, Dipl.-Ing., D-38108 Braunschweig (DE)
(72) Erfinder: Thiedig, Ullrich, Dipl.-Ing., D-38118 Braunschweig (DE); Wente, Holger, Dipl.-Ing., D-38108 Braunschweig (DE)
(74) Vertreter: Lins, Edgar, Dipl.-Phys. Dr.jur.

(56) Entgegenhaltungen:
- EP-A- 0 157 141
- EP-A- 0 168 557
- EP-A- 0 268 509
- WO-A-89/01129
- DE-A- 3 428 983
- DE-A- 3 617 126
- JP-A-62 233 736
- US-A- 4 396 945
- US-A- 4 674 869

## Beschreibung

Die Erfindung betrifft eine optische Meßeinrichtung zur Lagebestimmung von vom jeweiligen Hintergrund deutlich abgesetzten punkfförmigen Objekten, bestehend aus einem einen Bildausschnitt abtastenden opto-elektrischen Wandler, dessen Ausgangssignale selektiert einer Auswertungseinrichtung zugeführt werden.

Zur momentanen Lagebestimmung von Objekten, insbesondere zur Analyse der Änderungen der Lage der Objekte, also des Bewegungsablaufes, ist es bekannt, das entsprechende Objekt punkfförmig zu markieren und so deutlich vom Hintergrund abzuheben. Diese Markierung, die das Objekt deutlich vom jeweiligen Hintergrund absetzt, kann entfallen, wenn das Objekt punktförmig selbst strahlt, oder durch eine am Objekt angebrachte Lichtquelle oder durch Anstrahlen mit geeignetem Licht, ggf. Laserlicht vorgenommen werden. Der das Objekt umfassende Bildausschnitt wird mit einem opto-elektrischen Wandler, vorzugsweise einer Videokamera abgetastet, die Ausgangssignale entsprechend den jeweiligen momentanen Helligkeitsgraden bzw. den Farbintensitäten erzeugt und üblicherweise hieraus übliche BAS-, F-BAS- und/oder RGB-Signale erzeugt. Wenigstens eines dieser Signale wird in einem Rechner daraufhin ausgewertet, an welcher Stelle sich das vom Hintergrund abhebende Objekt befindet. Ggf. werden zur Auswertung Farbsignale der Farbkamera herangezogen, wenn sich das Objekt durch eine bestimmte Farbe vom Hintergrund bzw. von anderen Objekten abhebt.

Die übliche Auswertung des Bildinhalts erfolgt nach einer pixelweisen Analog-Digital-Wandlung in einem Rechner. Der Rechner überprüft alle gemessenen Werte und stellt den zu dem Objekt gehörenden Signalwert fest. Die hierfür benötigte Rechenzeit ist regelmäßig größer als die Bildwechselfrequenz, wenn die Kamera normgemäß betrieben wird. Zur Abspeicherung der ausgelesenen Signalwerte müssen große Speicher eingesetzt werden. Eine Beobachtung von Langzeitvorgängen, beispielsweise Gebäudeschwingungen, ist nicht möglich.

Aus der DE 34 23 135 A1 ist ein Meßverfahren bekannt, bei dem ein Objekt mit einem schmalen Lichtstreifen beleuchtet wird. Die nach dem Triangulationsprinzip positionierte Kamera erkennt Entfernungssprünge bei einem Versatz der Zeile in Spaltenrichtung. Zur Ermöglichung einer Echtzeit-Auswertung wird bei dem bekannten Verfahren vorgesehen, alle Signalwerte einer Spalte parallel auszugeben und zu digitalisieren. In einer nachfolgenden Auswahl-Logikschaltung wird dann ermittelt, welchem Zeilenwert der abgebildete Lichtstreifen zuzuordnen ist. Die Digitalisierung kann in einfachster Form lediglich die Unterscheidung bewirken, ob der Signalwert oberhalb oder unterhalb eines Schwellenwertes liegt.

Durch DE-A-34 28 983 ist ein ähnliches Meßverfahren bekannt, bei dem das Ausgangssignal einer Halbleiterkamera ebenfalls einer Schwellenwertschaltung zugeführt wird, in der die Analogwerte mit einem Schwellenwert verglichen werden. In Abhängigkeit davon, ob der ermittelte Helligkeitswert oberhalb oder unterhalb des Schwellenwerts liegt, wird ein digitales Signal "1" oder "0" erzeugt. Die so gebildete Binärmatrize wird anschließend nach vorgegebenen Kriterien, die sich aus der Kenntnis des abgebildeten Gegenstandes ergeben können, reduziert und weiter verarbeitet.

Der Erfindung liegt die Aufgabe zugrunde, eine optische Meßeinrichtung der eingangs erwähnten Art so auszubilden, daß durch eine einfache Datenselektion eine Echtzeit-Auswertung, ggf. auch bei über der Norm liegenden Abtastfrequenzen, möglich ist.

Diese Aufgabe wird bei einer optischen Meßeinrichtung der eingangs erwähnten Art gelöst durch eine an den Ausgang des opto-elektrischen Wandlers angeschlossene Extremwert-Detektionsschaltung mit einer Vergleichseinrichtung, welche so ausgebildet ist, daß in Echtzeit entweder jeder ausgelesene Signalwert des opto-elektrischen Wandlers beim Auslesen sofort mit einem gespeicherten bisherigen Extremwert verglichen wird, oder der Extremwert aus einer Anzahl gleichzeitig ausgelesener Signalwerte bestimmt und gegebenenfalls mit einem gespeicherten bisherigen Extremwert verglichen wird, und entsprechend dem vorgenommenen Vergleich als Extremwert speicherbar ist, und durch einen von der Extremwert-Detektionsschaltung gesteuerten Speicher für die zu dem festgestellten Extremwert gehörigen Positionsdaten.

Bei der erfindungsgemäßen optischen Meßeinrichtung werden die aus dem opto-elektrischen Umformer ausgelesenen Signalwerte einer Extremwert-Detektionsschaltung zugeführt, die jeweils einen oder mehrere neue Signalwerte mit früheren Signalwerten vergleicht und den jeweils höheren Wert festhält. Die zugehörigen Lagekoordinaten des für ein Halbbild oder Bild festgestellten Extremwertes werden in den Speicher übergeben. Im Speicher finden sich daher nur die notwendigen Informationen über die Zeit (das jeweils abgetastete Bild oder Halbbild) und über die Lage des betreffenden Extremwerts.

Der detektierte Extremwert kann ein Maximalaber auch ein Minimalwert sein. Bei der erfindungsgemäßen optischen Meßeinrichtung wird die vom Rechner auszuwertende Datenmenge sofort in maximaler Weise reduziert, so daß keine Auswahl-Logikschaltung mehr erforderlich ist, um die Lage des Extremwerts festzustellen und abzuspeichern.

Zur Unterscheidung verschiedener Objekte, deren Bahnen sich ggf. (nacheinander) überschneiden können, ist es zweckmäßig, die verschiedenen Objekte punkfförmig mit verschiedenen Farben zu markieren und die Auswertung mit RGB-Signalen einer Farbkamera vorzunehmen. Ein Farbart-Detektor kann die den verwendeten Farben zugehörige Farbart, beispielsweise durch Quotientenbildung der einzelnen RGB-Signalanteile, feststellen und so die Extremwertbestimmung steuern. Dies kann dadurch geschehen, daß der Farbart-Detektor quasi als dem Extremwertdetektor vorgeschaltetes Filter arbeitet oder die Abspeicherung eines detektierten Extremwertes verhindert, der nicht zu der verwendeten Farbart gehört.

Eine andere Möglichkeit, verschiedene Objekte voneinander zu unterscheiden, besteht darin, die mehreren Objekte synchron mit der Abtastfrequenz des opto-elektrischen Wandlers impulsförmig sequentiell deutlich vom Hintergrund abzusetzen, beispielsweise mit einer Strahlenquelle, wie einem Laser, anzustrahlen, und in der Auswertungsschaltung die empfangenen Signale sequentiell den verschiedenen Objekten zuzuordnen. Eine derartige Auswertung nach Art eines Multiplexbetriebes erfordert eine hohe Abtastfrequenz, die aufgrund der erfindungsgemäßen Echtzeit-Auswertung beispielsweise mit Hilfe schneller Videokameras realisiert werden kann. Das sequentielle markierende Objekt hat den Vorteil, daß für alle Objekte die Selektion der Ausgangssignale nach demselben Kriterium (beispielsweise Schwellwert oder Spitzenwert) erfolgen kann.

Durch die Verwendung wenigstens synchron gesteuerter opto-eletrischer Wandler kann ein Bildausschnitt aus verschiedenen Blickwinkeln abgetastet werden, so daß eine räumliche Bestimmung der Bahnkurve eines Objektes möglich ist.

Die erfindungsgemäße optische Fernmeßeinrichtung läßt sich durch die Verwendung entsprechender Optiken im mikroskopischen wie im makroskopischen Bereich einsetzen. Auch die Überprüfung von schwerzugänglichen Objekten, beispielweise Brücken, Gleisen, Freileitungen usw. ist möglich, solange ein Sichtkontakt zu dem Objekt besteht. Es kann beispielsweise mit einem Laser seitlich angestrahlt werden, so daß die Wanderung des Laserflecks auf dem Objekt ein Maß für die Bewegung des Objektes ist.

Die erfindungsgemäße Fernmeßeinrichtung erlaubt Weg-, Geschwindigkeits- und Beschleunigungsmessungen, insbesondere Schwingungsmessungen von Objekten. Die Anwendungsgebiete sind vielfältig.

Typische Anwendungen sind die Aufnahme von Brückenschwingungen, die Feststellung der Durchbiegung von Gleisanlagen unter Belastung, die Schwingung von Gebäuden unter Windeinfluß, Aufnahme der Schwingungen von Freileitungen, eine Bewegungsanalyse im Bereich der Arbeitsmedizin, die Trainingsunterstützung beim Sport, die Kieferfunktionsdiagnostik in der Zahnmedizin, Aufnahme und Regelung von Roboterbewegungen sowie die Prognose von Bewegungen in Echtzeit usw.

In allen Fällen läßt sich die Abtastrate den Erfordernissen anpassen und ist nach oben praktisch nur durch die Schnelligkeit der Kameraelektronik, nicht aber durch die Auswertungseinrichtung begrenzt. Dabei sind Langzeitmessungen ohne Überschreitung der Darstellungsdichte möglich.

Für Höchstgeschwindigkeitsanwendungen, bei denen sehr hohe Abtastfrequenzen der Fernsehkamera eingesetzt werden müssen, ist es zweckmäßig, eine parallele Ausgabe von Bildpunktsignalen des opto-elektrischen Wandlers vorzusehen. Dabei können vorzugsweise die parallel ausgegebenen Bildpunktsignale gleichzeitig auf Eingänge einer entsprechenden Anzahl von Operationsverstärkern gelangen, deren Ausgangsleitungen jeweils mit einem Eingang eines Dekodierers zur Feststellung des mit dem Extremwert beaufschlagten Operationsverstärkers und über jeweils eine Diode zusammengeschaltet mit den anderen Eingängen der Operationsverstärker verbunden sind. Die so mit den Bildpunktsignalen beaufschlagten Operationsverstärker ermitteln automatisch den Extremwert der parallel ausgegebenen Bildpunktsignale, der an einem der Operationsverstärker anliegt. Dieser Operationsverstärker weist ein Ausgangssignal auf, das von den Ausgangssignalen aller anderen Operationsverstärker verschieden ist, so daß vom Dekodierer die Position des Extremwerts sofort erkannt werden kann.

Werden alle Bildpunktsignale gleichzeitig parallel ausgegeben, läßt sich für die gewünschte Extremwertbestimmung eine selbsttaktende Kamera verwenden, wenn die Größe des ermittelten Extremwerts überwacht wird. Ist diese Größe deutlich genug erkennbar, braucht eine weitere Belichtung durch die Kamera nicht mehr zu erfolgen, so daß ein Bildwechsel durch die Kamera erfolgen kann. Der Bildwechsel kann somit von dem Erreichen eines vorbestimmten Spannungswertes durch den festgestellten Extremwert gesteuert werden.

Die Erfindung soll im folgenden anhand von in der Zeichnung dargestellten Ausführungsbeispielen näher erläutert werden. Es zeigen:
- Figur 1-: eine prinzipielle Anordnung einer optischen Meßeinrichtung
- Figur 2 -: ein Blockschaltbild für die Echtzeit-Auswertung des Bildsignals
- Figur 3 -: ein Prinzipschaltbild für eine Auswertung bei paralleler zeilenweiser Ausgabe der Bildpunktsignale

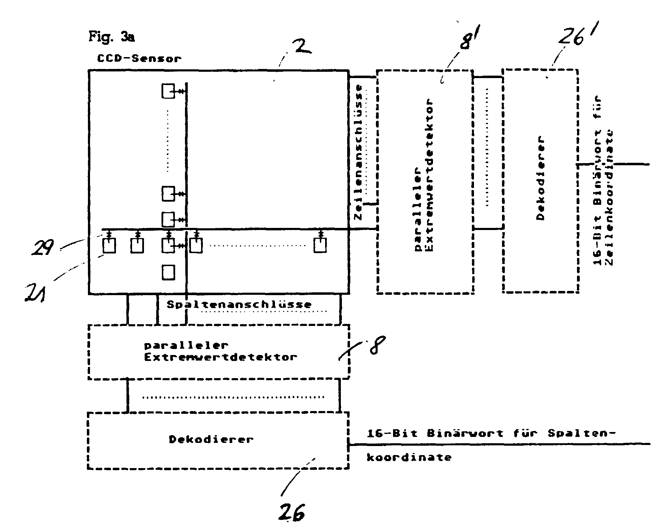

- Figur 3 a-: Ein Prinzipschaltbild für eine Auswertung bei paralleler Ausgabe aller Bildpunktsignale

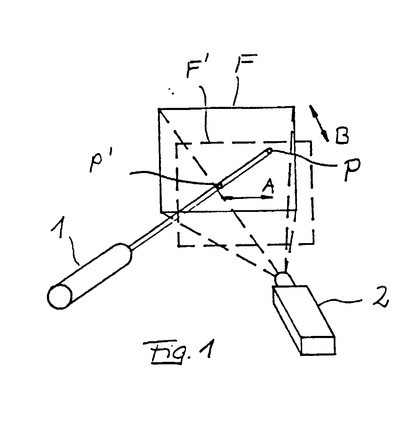

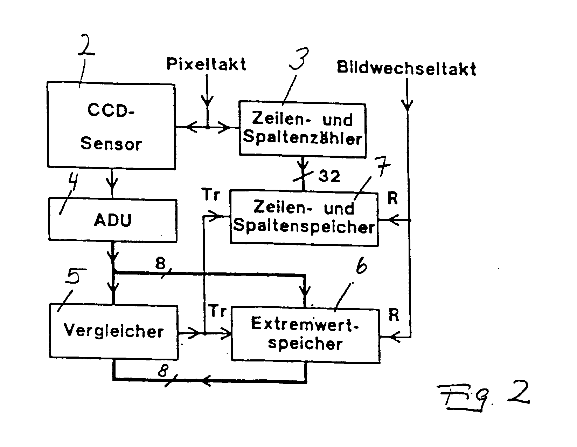

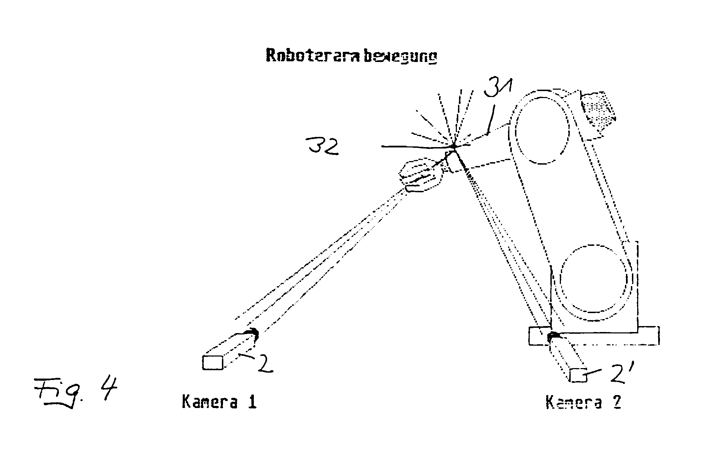

- Figur 4 -: eine modifizierte Anordnung gemäß Figur 1 für die Regelung einer Roboterarmbewegung

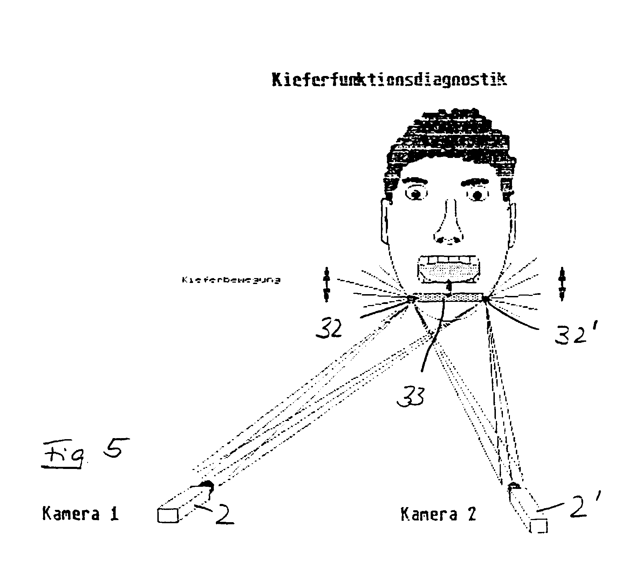

- Figur 5 -: eine Anwendung der optischen Meßeinrichtung für die Kieferfunktionsdiagnostik

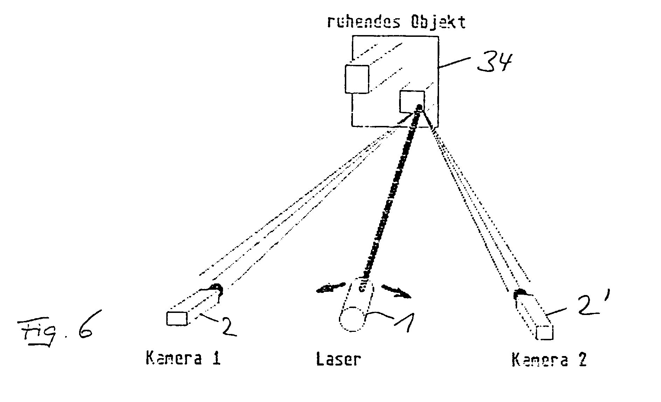

- Figur 6 -: eine Anwendung der optischen Meßeinrichtung zur Feststellung eines Oberflächenprofils

Figur 1 zeigt in einer schematischen perspektivischen Darstellung die Bewegung eines Objektes in einer senkrecht zur Beobachtungsrichtung stehenden Ebene (Doppelpfeil A) sowie in einer in Beobachtungsrichtung liegenden Richtung (Doppelpfeil B).

Das Objekt wird mit Hilfe einer durch einen Laser gebildeten Strahlenquelle 1 angestrahlt, die auf dem Objekt einen Bildpunkt P erzeugt. Das Objekt liegt innerhalb eines Bildausschnitts F eines durch eine Videokamera 2 gebildeten opto-elektrischen Wandlers.

Durch eine Bewegung in Richtung des opto-elektrischen Wandlers 2, die in Figur 1 durch eine gestrichelt eingezeichnete Verschiebung des Bildausschnitts F'symbolisiert ist, sowie durch eine seitliche Bewegung in Richtung des Doppelpfeils A verschiebt sich der Bild-punkt P zum Bildpunkt P'. Diese Bewegung des Bildpunktes P wird von dem opto-elektrischen Wandler 2 erkannt und läßt aufgrund der Kenntnis der relativen Lage von Strahlenquelle 1 und opto-elek-trischen Wandler 2 zueinander eine Berechnung der tatsächlichen Bewegung des Objektes zu.

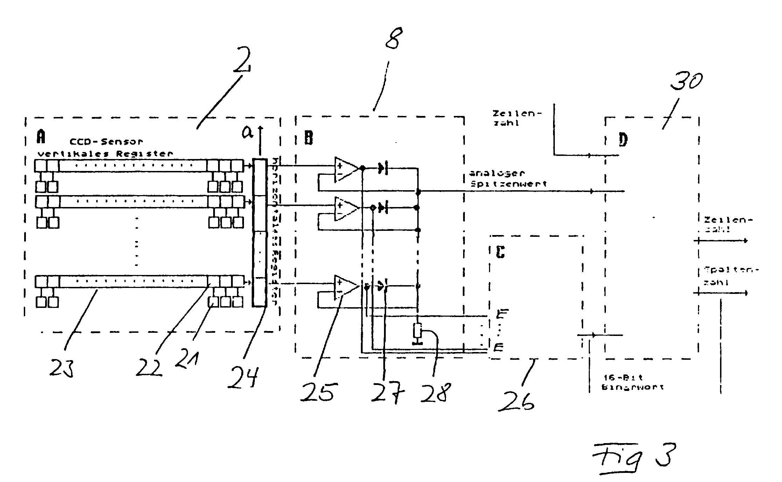

Figur 2 zeigt eine Anordnung, die eine Echtzeit-Auswertung ermöglicht. Aus der Halbleiter-Videokamera 2, die durch einen CCD-Sensor gebildet ist, werden die Signalwerte im Pixeltakt ausgelesen. Mit dem Pixeltakt wird ein Zeilen - und Spaltenzähler 3 weitergeschaltet. Die jeweils ausgelesenen Signalwerte werden in einem Analog/Digital-Umsetzer (ADU) 4 in Digitalwerte umgesetzt. Der jeweils erste Ausgangswert des ADU 4 nach einem Bildwechseltakt wird in einen Extremwertspeicher 6 als Extremwert abgespeichert. Die im Pixeltakt folgenden digitalen Ausgangswerte des ADU 4 werden jeweils mit dem in dem Extremwertspeicher 6 abgespeicherten Extremwert in einem Vergleicher 5 verglichen. Übersteigt der momentane Ausgangswert des ADU 4 den vorher abgespeicherten Extremwert, gibt der Vergleicher 5 ein Triggersignal an den Extremwertspeicher 6 zur Abspeicherung des momentanen Ausgangssignals des ADU 4 als neuen Extremwert. Gleichzeitig gibt der Vergleicher 5 ein Triggersignal an einen Zeilen - und Spaltenspeicher 7, an dem das momentane Ausgangssignal des Zeilen - und Spaltenzählers 3 ansteht. Mit dem abgespeicherten Extremwert wird daher gleichzeitig die Zeilen - und Spalteninformation in dem Zeilen - und Spaltenspeicher 7 abgespeichert. Ist das Bild komplett ausgelesen, entsteht also ein neues Bildwechseltaktsignal, wird der in dem Zeilen - und Spaltenspeicher 7 abgespeicherte Positionswert durch den festgestellten Extremwert einem (nicht dargestellt) Speicher zugeführt bzw. gelangt direkt auf einen Rechner.

Die in Figur 3 dargestellte Auswertungseinrichtung weist gegenüber der Vorrichtung in Figur 2 im wesentlichen zwei Modifikationen auf: ein Teil der Bildpunktsignale wird parallel ausgelesen (nämlich alle Bildpunktsignale einer Zeile) und die Extremwertfeststellung (einer Zeile) findet mit den analogen Signalen, also ohne vorherige Analog/Digital-Umsetzung, statt. Die Extremwertermittlung der Spalten findet hingegen - wie in Fig. 2 - seriell statt.

In Figur 3 ist der CCD-Sensor der Videokamera 2 in Form von Pixeln 21 und zugehörigen Ladungsspeichern 22 dargestellt, wobei die zu einer Spalte gehörenden Ladungsspeicher 22 jeweils ein Register 23 bilden, durch das die Ladungswerte im Pixeltakt geschoben werden. Am Ausgang der Register 23 stehen die Ladungswerte in Form einer Zeile 24 an. Es sind Videokameras 2 bekannt, aus denen die parallelen Daten einer Zeile 24 als ein Datenblock (in Richtung Pfeil a) ausgelesen werden.

Erfindungsgemäß gelangen die am Ausgang parallelen Register 23 jeweils anstehenden Daten auf den nicht invertierenden Eingang eines dem Register 23 zugeordneten Operationsverstärkers 25. Dessen Ausgang ist unmittelbar mit einem ihm zugeordneten Eingang E eines Dekodierers 26 verbunden. Die Ausgänge aller Operationsverstärker sind über jeweils eine Diode 27 miteinander verbunden und auf alle invertierenden Eingänge der Operationsverstärker 25 zurückgekoppelt. Da der Rückkopplungsweg über einen Widerstand 28 an Masse liegt, sind die Operationsverstärker 25 unmittelbar nach dem Bildwechseltakt alle für die Bildpunktsignale am Ausgang der Register 23 durchlässig. Auf die invertierenden Eingänge der Operationsverstärker 25 wird das maximale Signal zurückgekoppelt, so daß in diesem Rückkopplungsweg der analoge Spitzenwert ansteht und einem digitalen, seriellen Extremwertdetektor 30 zugeführt werden kann. Nur einer der Operationsverstärker 25, nämlich der, an dem der Spitzenwert ansteht, ist an seinem Ausgang positiv, während die anderen auf 0 liegen, da bei ihnen der Wert am invertierenden Eingang größer ist als der Wert am nicht invertierenden Eingang. Der Dekodierer 26 erhält daher nur an einem seiner Eingänge ein positives Signal E, das unmittelbar einem Spaltenwert zugeordnet ist.

In dem dargestellten Ausführungsbeispiel erhält der serielle Extremwertdetektor 30 ein Ausgangssignal eines Zeilenzählers und vergleicht die pro Zeile festgestellten Spitzenwerte zur Ermittlung des Spitzenwertes des gesamten Bildes. Die zu dem festgestellten Spitzenwert gehörende Zeilenzahl und Spaltenzahl wird vom Vergleicher 30 zur weiteren Verarbeitung ausgegeben. Selbstverständlich ist es auch möglich, alle Bildpunktwerte der Videokamera 2 parallel auszugeben. In diesem Fall entfällt der Vergleicher 30, allerdings steigt die Anzahl der benötigten Operationsverstärker stark an.

Figur 3 a zeigt eine Anordnung, bei der sowohl alle Spaltenwerte als auch alle Zeilenwerte parallel ausgegeben und parallelen Extremwertdetektoren 8,8' zugeführt werden, die den Aufbau des anhand der Figur 3 beschriebenen parallelen Extremwertdetektors 8 aufweisen. Am Ausgang der angeschlossenen Dekodierer 26,26' stehen die digitalen Informationen über die Spaltenkoordinate und die Zeilenkoordinate an.

Die Extremwertdetektoren 8,8' erlauben die Überwachung der Größe des Extremwertes. Erreicht dieser einen vorbestimmten Wert, braucht die Kamera 2 nicht länger belichtet zu werden, so daß nach Erreichung des vorbestimmten Spannungswertes für den Extremwert ein Bildwechsel in der Kamera 2 getriggert werden kann. Auf diese Weise läßt sich eine maximale Taktfrequenz bei einem vorgegebenen Signal-Rausch-Verhältnis erzielen.

Um gemäß dem dargestellten Ausführungsbeispiel die Ladungswerte von den Pixeln 21 sowohl zeilenmäßig als auch spaltenmäßig entnehmen zu können, sind die Verbindungen der Pixel 21 zu den Abnahmeleitungen mit Hilfe von Dioden 29 hergestellt.

Figur 4 zeigt die Anwendung einer erfindungsgemäßen Meßeinrichtung für die Überprüfung und ggf. Regelung der Bewegung eines Roboterarms 31, wobei zwei Kameras 2,2' im Winkel zueinander angeordnet sind, um die räumliche Bewegung des Roboterarms 31 zu erfassen. Dieser ist mit einer strahlenden Lichtquelle 32 versehen, die als punktförmiges Objekt von den Kameras 2,2' verfolgt wird. Mit der Anordnung an die momentane Position des Roboterarms 31 ermittelt und als Ist-Wert in einen Regelkreis durch Vergleich mit einem Soll-Wert zur genauen Positionierung verwendet werden.

Bei sich wiederholenden Bewegungsvorgängen, die auf ihren störungsfreien Ablauf überwacht werden sollen, kann in einer "Lernphase" die Form der Bewegungsbahn der Lichtquelle 32 auf dem Roboterarm 31 aufgenommen und abgespeichert werden. Im Betrieb können unzulässige Abweichungen von der Sollbahn detektiert und angezeigt bzw. ausgeregelt werden.

Bei dem in Figur 5 dargestellten Ausführungsbeispiel überwachen die beiden Kameras 2,2' zwei Objektpunkte 32,32', die an einem mit einem Kiefer verbundenen Stab 33 angebracht sind. Die Bahnen der beiden Objektpunkte 32,32' können sich naturgemäß nicht überschneiden. Für diesen Anwendungsfall ist eine parallele Auswertung von zwei Teilbereichen des Pixelfeldes der Kameras 2,2' anwendbar.

Figur 6 zeigt ein Ausführungsbeispiel, bei dem die durch einen Laser gebildete Strahlenquelle 1 bewegbar ist und ein ruhendes Objekt 34 abtastet. Durch eine vollständige Abtastung der Objektoberfläche mit dem Laserstrahl kann man das gesamte Oberflächenprofil erhalten. Die Anforderungen an die Führung des Lasers sind sehr gering, da lediglich eine vollständige Abtastung der Objektoberfläche gewährleistet sein muß.

## Patentansprüche

1. Optische Meßeinrichtung zur Lagebestimmung von vom jeweiligen Hintergrund deutlich abgesetzten punktförmigen Objekten (32,32'), bestehend aus einem einen Bildausschnitt abtastenden opto-elektrischen Wandler (2,2'), dessen Ausgangssignale selektiert einer Auswertungseinrichtung zugeführt werden, **gekennzeichnet durch** eine an den Ausgang des opto-elektrischen Wandlers (2,2') angeschlossene Extremwert-Detektionsschaltung (5,6,8,26,30;8,8') mit einer Vergleichseinrichtung (5,6;8), welche so ausgebildet ist, daß in Echtzeit entweder jeder ausgelesene Signalwert des opto-elektrischen Wandlers (2,2') beim Auslesen sofort mit einem gespeicherten bisherigen Extremwert verglichen wird, oder der Extremwert aus einer Anzahl gleichzeitig ausgelesener Signalwerte bestimmt und gegebenenfalls mit einem gespeicherten bisherigen Extremwert verglichen wird, und entsprechend dem vorgenommenen Vergleich als Extremwert speicherbar ist, und durch einen von der Extremwert-Detektionsschaltung (5,6,8,26,30;8,8') gesteuerten Speicher (7) für die zu dem festgestellten Extremwert gehörigen Positionsdaten.

2. Optische Meßeinrichtung nach Anspruch 1, dadurch gekennzeichnet, daß wenigstens zwei opto-elektrische Wandler (2,2') synchron gesteuert sind und Bildausschnitte aus verschiedenen Winkeln abtasten.

3. Optische Meßeinrichtung nach Anspruch 1 oder 2, dadurch gekennzeichnet, daß ein Farbart-Detektor vorgesehen ist, dessen Ausgangssignal die Bestimmung eines Extremwerts in einer vorbestimmten Farbart steuert.

4. Optische Meßeinrichtung nach einem der Ansprüche 1 bis 3, dadurch gekennzeichnet, daß mehrere Objekte (32,32') synchron mit der Abtastfrequenz des opto-elektrischen Wandlers (2,2') impulsförmig sequentiell deutlich vom Hintergrund abgesetzt werden und daß in der Auswertungseinrichtung die empfangenen Signale sequentiell den verschiedenen Objekten (32,32') zugeordnet werden.

5. Optische Meßeinrichtung nach einem der Ansprüche 1 bis 4, dadurch gekennzeichnet, daß zum Absetzen des Objekts (32,32') vom Hintergrund das Objekt mit einer Strahlenquelle angestrahlt wird.

6. Optische Meßeinrichtung nach Anspruch 5, dadurch gekennzeichnet, daß die Strahlenquelle (1) ein Laser ist.

7. Optische Meßeinrichtung nach einem der Ansprüche 1 bis 6, gekennzeichnet durch eine parallele Ausgabe von Bildpunktsignalen des opto-elektrischen Wandlers (2,2') , die gleichzeitig auf Eingänge (+) einer entsprechenden Anzahl von Operationsverstärkern (25) gelangen, deren Ausgangsleitungen jeweils mit einem Eingang (E) eines Dekodierers (26) zur Feststellung des mit dem Extremwert beaufschlagten Operationsverstärkers (25) und über jeweils eine Diode (27) zusammengeschaltet mit den anderen Eingängen der Operationsverstärker (25) verbunden sind.

## Claims

1. Optical measuring device for determining the position of punctiform objects (32, 32') distinctly contrasted from the respective background, comprising an opto-electrical transducer (2, 2') which scans an image segment and the output signals of which are selectively supplied to an evaluation device, characterized by an extreme value detection circuit (5, 6, 8, 26, 30; 8, 8') which is connected to the output of the opto-electrical transducer (2, 2') and has a comparison device (5, 6; 8) which is designed such that, in real time, either each signal value read out from the opto-electrical transducer (2, 2') is compared with a stored previous extreme value immediately on reading out or the extreme value from a number of signal values read out simultaneously is determined and, if appropriate, compared with a stored previous extreme value and, corresponding to the comparison undertaken, may be stored as extreme value, and characterized by a store (7), which is controlled by the extreme value detection circuit (5, 6, 8, 26, 30; 8, 8'), for the position data belonging to the determined extreme value.

2. An optical measuring device as claimed in Claim 1, characterised in that at least two opto-electrical transducers (2, 2') are synchronously controlled and scan image segments from different angles.

3. An optical measuring device as claimed in Claim 1 or 2, characterised in that a chromaticity detector is provided, the output signal of which controls the determination of an extreme value in a predetermined chromaticity.

4. An optical measuring device as claimed in one of Claims 1 to 3, characterised in that in synchronism with the scanning frequency of the opto-electrical transducer (2, 2') a plurality of objects (32, 32') are distinctly contrasted from the background sequentially and in pulsed fashion, and in that in the analysis device the received signals are sequentially assigned to the different objects (32, 32').

5. An optical measuring device as claimed in one of Claims 1 to 4, characterized in that in order to contrast the object (32, 32') from the background, the object is irradiated with a radiation source.

6. An optical measuring device as claimed in Claim 5, characterised in that the radiation source (1) is a laser.

7. An optical measuring device as claimed in one of Claims 1 to 6, characterised by a parallel emission of image element signals of the opto-electrical transducer (2, 2') which are fed simultaneously to inputs (+) of a corresponding number of operational amplifiers (25), the output lines of which are in each case connected to an input (E) of a decoder (26) for the determination of the operational amplifier (25) supplied with the extreme value and, interconnected via a respective diode (27), are connected to the other inputs of the operational amplifiers (25).

## Revendications

1. Dispositif de mesure optique pour déterminer la position d'objets de forme ponctuelle (32, 32') nettement détachés de leur fond respectif, qui se compose d'un transducteur opto-électrique (2, 2') balayant un champ d'image, transducteur dont les signaux de sortie sont transmis sélectivement à un dispositif d'analyse, caractérisé par un circuit de détection de valeur extrême (5, 6, 8, 26, 30; 8, 8') qui est raccordé à la sortie du transducteur opto-électrique (2, 2'), lequel comprend un dispositif comparateur (5, 6; 8) qui est agencé pour qu'en temps réel, ou bien chaque valeur de signal lue du transducteur opto-électrique (2, 2') est lors de la lecture aussitôt comparée avec une valeur extrême précédente enregistrée, ou bien la valeur extrême parmi plusieurs valeurs de signal lues simultanément est déterminée et le cas échéant comparée avec une valeur extrême précédente enregistrée, et peut être enregistrée comme valeur extrême selon la comparaison effectuée, et par une mémoire (7) pour les données de position associées à la valeur extrême déterminée, laquelle mémoire (7) est commandée par le circuit de détection de valeur extrême (5, 6, 8, 26, 30; 8, 8').

2. Dispositif de mesure optique selon la revendication 1, caractérisé en ce qu'au moins deux transducteurs opto-électdques (2, 2') sont commandés de façon synchrone et balaient des portions d'image sous des angles différents.

3. Dispositif de mesure optique selon la revendication 1 ou 2, caractérisé en ce qu'il est prévu un détecteur de chrominance , dont le signal de sortie commande la détermination d'une valeur extrême dans une chrominance prédéterminée.

4. Dispositif de mesure optique selon l'une des revendications 1 à 3, caractérisé en ce que plusieurs objets (32, 32') sont distinctement détachés vis-à-vis du fond, de façon séquentielle et sur un mode impulsionnel, en synchronisme avec la fréquence de balayage du transducteur opto-électrique (2, 2'), et en ce que, dans le dispositif d'analyse, les signaux reçus sont associés séquentiellement aux différents objets (32, 32').

5. Dispositif de mesure optique selon l'une des revendications 1 à 4, caractérisé en ce que pour détacher l'objet (32, 32') vis-à-vis du fond, l'objet est exposé à une source de rayonnement.

6. Dispositif de mesure optique selon la revendication 5, caractérise en ce que la source de rayonnement (1) est un laser.

7. Dispositif de mesure optique selon l'une des revendications 1 à 6, caractérisé par une émission parallèle de signaux de points d'image du transducteur opto-électrique (2, 2'), oui parviennent simultanément sur des entrées (+) d'un nombre correspondant d'amplificateurs opérationnels (25) dont les conducteurs de sortie sont reliés chacun à une entrée respective (E) d'un décodeur (26) pour la détermination de l'amplificateur opérationnel (25) excité par la valeur extrême et sont reliés conjointement aux autres entrées des amplificateurs opérationnels (25), chacun par l'intermédiaire d'une diode (27).
